# EUROPÄISCHE PATENTSCHRIFT

(11) **EP 0 487 924 B1**
(45) Veröffentlichungstag und Bekanntmachung des Hinweises auf die Patenterteilung: **09.07.1997**
(21) Anmeldenummer: 91118580.9
(22) Anmeldetag: 31.10.1991
(51) Int. Cl.: B22D 41/52, B22D 41/60, B22D 41/30

(54) **Verfahren zur Herstellung von keramischen Form- und/oder Profilkörpern**
Process for manufacturing ceramic mouldings and/or profile members
Procédé de fabrication d'objets céramiques façonnés et/ou profilés

(30) Priorität: 29.11.1990 DE 4038061
(43) Veröffentlichungstag der Anmeldung: 03.06.1992
(73) Patentinhaber: DIDIER-WERKE AG, 65189 Wiesbaden (DE)
(72) Erfinder: Brückner, Raimund, W-6272 Engenhahn (DE); Rothfuss, Hans, W-6204 Taunusstein (DE); Ott, Albert, W-6273 Waldems-Wüstems (DE); Lührsen, Ernst, W-6208 Bad Schwalbach (DE)
(74) Vertreter: Brückner, Raimund, Dipl.-Ing.

(56) Entgegenhaltungen:
- DE-C- 638 612
- FR-A- 1 525 154
- FR-A- 2 652 287
- US-A- 2 475 777
- US-A- 4 359 625
- PATENT ABSTRACTS OF JAPAN vol. 13, no. 94 (M-804)(3442) 6. März 1989

## Beschreibung

Die Erfindung betrifft ein Verfahren zur Herstellung von keramischen Form- und/oder Profilkörpern, wie Steine, Platten, Stangen, Rohre für den Hochtemperatureinsatz, insbesondere bei metallurgischen Stranggießanlagen, wobei eine keramische Mischung geformt und einer thermischen Behandlung unterworfen wird.

Nach dem Stand der Technik werden solche Form- und/oder Profilkörper aus einer keramischen Mischung entsprechender Materialien geformt und danach thermisch behandelt, insbesondere gebrannt. Die dann fertigen Form- und/oder Profilkörper werden am Einsatzort ihrem Zweck entsprechend montiert.

In der US-PS 3 435 992 ist ein derartiger Form- und/oder Profilkörper als Tülle für einen Ausguß eines metallurgischen Gefässes beschrieben. Am Einsatzort soll der Ausguß aufgeheizt werden. Es ist hierfür eine elektrische Beheizung vorgesehen. Ist der Ausguß elektrisch leitfähig, dann läßt er sich mittels einer Induktionsspule induktiv erwärmen. Es kann auch eine kapazitive bzw. dielektrische Beheizung des Ausgusses vorgesehen sein. Außerdem ist auch eine Widerstandsbeheizung möglich.

In der US-PS 4 359 625 ist als Form- und/oder Profilkörper der eingangs genannten Art ein Eintauchausguß vorgeschlagen. Dieser ist am Einsatzort durch Widerstandsheizung aufheizbar. Hierfür ist das Material des Eintauchausgusses elektrisch leitfähig gemacht. Eine Wärmeisolierung soll die Wärmeabstrahlung des aufgeheizten Eintauchausgusses herabsetzen.

Nach der DE-PS 638 612 ist ein Bodenausguß mit Einsatzring bekannt, wobei der Bodenausguß zunächst vorgebrannt wird und der weitere Brand durch die Wärme des durch den Ausgußkanal abfließenden Metalls, also bereits während des Betriebs der Gießanlage, erfolgt.

Aufgabe der Erfindung ist es, ein Verfahren der eingangs genannten Art vorzuschlagen, bei dem der für die thermische Behandlung und die Aufheizung notwendige Gesamtaufwand verringert ist.

Erfindungsgemäß ist obige Aufgabe bei einem Verfahren der eingangs genannten Art durch die Merkmale des Patentanspruchs 1 gelöst.

Bei diesem Verfahren braucht der Form- und/oder Profilkörper zwischen der thermischen Behandlung, die zu seiner Herstellung gehört, und der Aufheizung, die für den Betrieb am Einsatzort vorteilhaft ist, nicht abgekühlt zu werden. Dies setzt den Gesamtenergiebedarf beträchtlich herab und erlaubt den Einsatz temperaturwechselbeständig empfindlicher Werkstoffe. Mittels der Aufheizvorrichtung muß nicht die gesamte thermische Behandlung des Form- und/oder Profilkörpers vorgenommen werden. Soweit es für die notwendige Stabilität des Form- und/oder Profilkörpers beim Transport zum Einsatzort nötig ist, kann die thermische Behandlung teilweise gleich nach der Formung vorgenommen werden. Am Einsatzort ist in der Aufheizvorrichtung selbst dann nur noch die thermische Endbehandlung vorzunehmen.

Durch die Erfindung ist auch die Herstellungsdauer verkürzt. Denn in dem Betrieb, in dem die keramische Mischung geformt wird, entfällt - zumindest teilweise - die thermische Behandlung und die Zeit für die Abkühlung. Darüberhinaus führt das Verfahren auch zu einer Verringerung des apparativen Aufwandes, da eine einzige Aufheizvorrichtung genügt, um einerseits die thermische Behandlung und andererseits die Aufheizung durchzuführen. Vorzugsweise erfolgen die thermische Behandlung und die Aufheizung in der Aufheizvorrichtung gleichzeitig. Dies schließt jedoch nicht aus, daß die Aufheizvorrichtung zunächst in einem Temperaturgang gefahren wird, der für die thermische Behandlung notwendig ist, und sie anschließend den Form- und/oder Profilkörper auf die gewünschte Aufheiztemperatur bringt. Die thermische Behandlung und die Aufheizung können bei einem elektrisch leitenden Form- und/oder Profilkörper induktiv mittels eines Induktors und/oder bei einem dielektrischen Form- und/oder Profilkörper kapazitiv erfolgen. Weist der Form- und/oder Profilkörper einen entsprechenden elektrischen Widerstand auf, dann kann eine Widerstandsheizung vorgesehen sein, bei der der Form- und/oder Profilkörper selbst den Heizwiderstand bildet.

Die thermische Behandlung und die Aufheizung können jedoch auch mittels eines, insbesondere elektrischen, Heizelements der Aufheizvorrichtung durch Wärmestrahlung und/oder Wärmeleitung erfolgen, wobei das Heizelement den Form- und/oder Profilkörper umgreift und/oder in ihn eingesetzt ist.

Die thermische Behandlung und die Aufheizung können auch mittels eines Brenners der Aufheizvorrichtung erfolgen.

In Ausgestaltung der Erfindung ist die Aufheizvorrichtung mit einer Einführungs- und/oder Anschlußvorrichtung für den Form- und/oder Profilkörper integriert oder integrierbar, mittels der der Form- und/oder Profilkörper als Eintauchausguß am Einsatzort in eine Kokille einschwenkbar und an einem metallurgischen Gefäß oder dessen Verschluß festlegbar ist.

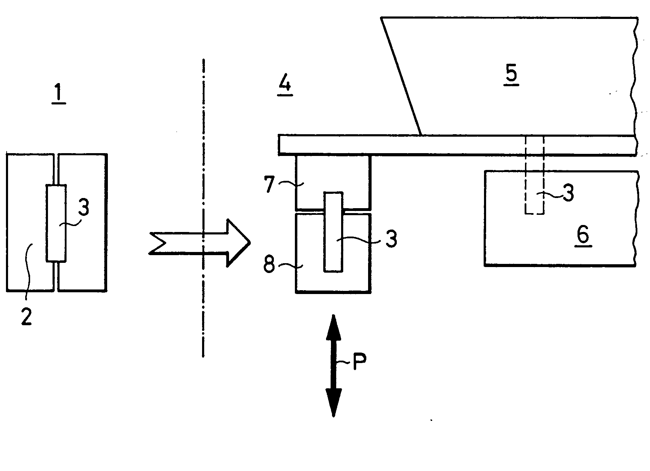

Weitere vorteilhafte Ausgestaltungen der Erfindung ergeben sich aus den Unteransprüchen und der folgenden Beschreibung eines Ausführungsbeispiels. Die Figur zeigt den Verfahrensablauf schematisch.

In einem Fertigungsbetrieb 1 werden in einem Formwerkzeug 2 Eintauchausgüsse 3 aus keramischem Material geformt. Deren thermische Behandlung wird im Fertigungsbetrieb 1 nicht abgeschlossen. Die Eintauchausgüsse 3 werden lediglich so weit stabilisiert, daß sie sich zum Transport zu einem Einsatzort 4, insbesondere einer Gießanlage, eignen.

Die Gießanlage 4 weist ein erstes metallurgisches Gefäß 5 und als zweites metallurgisches Gefäß eine Kokille 6 auf. Außerdem ist an der Gießanlage 4 eine Einführungs- und Anschlußvorrichtung 7 angeordnet, mit der eine Aufheizvorrichtung 8 integriert ist. Diese ist gegenüber der Einführungs- und Anschlußvorrichtung 7 in Richtung des Doppelpfeiles P heb- und senkbar.

Die Aufheizvorrichtung 8 dient der thermischen Behandlung des Eintauchausgusses 3 in der Weise, daß durch diese thermische Behandlung die Herstellung des Eintauchausgusses 3 beendet wird, so daß das Material des Eintauchausgusses 3 seine endgültige Struktur erhält. Außerdem dient die Aufheizvorrichtung 8 dem Beheizen des Eintauchausgusses 3 so, daß dieser auf eine gewünschte Temperatur vorgeheizt in die Kokille 6 eingesetzt werden kann. Zwischen der thermischen Behandlung und dem Aufheizen braucht der Eintauchausguß 3 nicht abgekühlt zu werden.

Die Aufheizvorrichtung 8 kann nach verschiedenen Prinzipien arbeiten. Die Aufheizvorrichtung 8 kann mit einer elektromagnetischen Induktionsspule als Induktor arbeiten, wobei dann in dem elektrisch leitenden Eintauchausguß 3 Wirbelströme induziert werden, die diesen auf die gewünschte Temperatur bringen.

Die Aufheizvorrichtung 8 kann auch mit Kondensatorbelägen kapazitiv arbeiten. Dabei führen die dielektrischen Eigenschaften des Eintauchausgusses 3 im elektrischen Wechselfeld zu einer Erhitzung.

In der Aufheizvorrichtung 8 kann auch der Eintauchausguß 3 selbst einen Heizwiderstand bilden. Es ist auch möglich, den Eintauchausguß 3 durch Wärmeleitung oder durch Wärmestrahlung mittels eines Heizelements der Aufheizvorrichtung 8 zu erwärmen.

Die Aufheizvorrichtung 8 bildet zugleich eine Wärmeisolation für den an der Einführungs- und Anschlußvorrichtung 7 angeordneten Eintauchausguß 3.

Die Arbeitsweise der Einführungs- und Anschlußvorrichtung 7 ist im wesentlichen folgende:

Der thermisch noch nicht fertig behandelte Eintauchausguß 3 wird in die Einführungs- und Anschlußvorrichtung 7 eingesetzt. Danach wird die Aufheizvorrichtung 8 angehoben, so daß der Eintauchausguß 3 in dieser hängt. Es erfolgt dann die thermische Behandlung des Eintauchausgusses 3. Gleich im Anschluß an die thermische Behandlung wird der Eintauchausguß 3 auf die gewünschte Aufheiztemperatur gebracht bzw. auf der gewünschten Aufheiztemperatur gehalten.

Wird dann der Eintauchausguß 3 in der Kokille 6 benötigt, dann wird die Aufheizvorrichtung 8 abgesenkt und die Einführungs- und Anschlußvorrichtung 7 schwenkt den aufgeheizten Eintauchausguß 3 in die Kokille 6, wonach dieser unten am Gefäß 5 bzw. dessen nicht näher dargestellten Verschluß gehalten wird.

Das beschriebene Verfahren ist auch bei anderen Bauteilen eines metallurgischen Gefässes, die vorgeheizt werden sollen, anwendbar. Beispielsweise kann das Verfahren auch bei einem Schattenrohr verwendet werden.

## Patentansprüche

1. Verfahren zur Herstellung von keramischen Form- und/oder Profilkörpern, wie Steine, Platten, Stangen, Rohre, für den Hochtemperatureinsatz, insbesondere bei metallurgischen Stranggießanlagen, wobei eine keramische Mischung geformt und einer thermischen Behandlung unterworfen wird und die thermische Behandlung zumindest teilweise am Einsatzort des Form- und/oder Profilkörpers mittels einer Aufheizvorrichtung durchgeführt wird, mittels der am Einsatzort auch die Vorheizung des Form- und/oder Profilkörpers vorgenommen wird, wobei die thermische Behandlung und Aufheizung induktiv, kapazitiv, mittels eines elektrischen Heizwiderstandes, durch Wärmestrahlung und/oder Wärmeleitung mittels eines elektrischen Heizelements oder mittels eines Brenners erfolgt und wobei die Aufheizvorrichtung den Form- und/oder Profilkörper umgreift und/oder in ihn eingesetzt ist.

2. Verfahren nach Anspruch 1,
dadurch gekennzeichnet,
daß die thermische Behandlung und die Aufheizung in der Aufheizvorrichtung gleichzeitig erfolgen.

3. Verfahren nach einem der vorhergehenden Ansprüche,
dadurch gekennzeichnet,
daß die Aufheizvorrichtung nach der thermischen Behandlung und Aufheizung zur Freigabe des Form- und/oder Profilkörpers abgesenkt wird.

4. Verfahren nach einem der vorhergehenden Ansprüche,
dadurch gekennzeichnet,
daß nach der Aufheizung die Aufheizvorrichtung eine Wärmeisolation für den Form- und/oder Profilkörper bildet.

5. Verfahren nach einem der vorhergehenden Ansprüche,
dadurch gekennzeichnet,
daß die Aufheizvorrichtung mit einer Einführungs- und/oder Anschlußvorrichtung für den Form- und/oder Profilkörper integriert oder integrierbar ist, mittels der der Form- und/oder Profilkörper am Einsatzort in ein metallurgisches Gefäß einschwenkbar und an einem metallurgischen Gefäß bzw. dessen Verschluß festlegbar ist.

6. Verfahren nach einem der vorhergehenden Ansprüche,
dadurch gekennzeichnet,
daß der Form- und/oder Profilkörper ein Eintauchausguß oder Schattenrohr ist.

## Claims

1. Method of manufacturing ceramic shaped and/or profiled bodies, such as bricks, plates, rods and tubes, for high temperature use, particularly use in metallurgical continuous casting installations, in which a ceramic mixture is shaped and subjected to a thermal treatment and the thermal treatment is performed at least partially at the place of use of the shaped and/or profiled body by means of a heating device, by means of which the preheating of the shaped and/or profiled body is also performed at the place of use, the thermal treatment and heating being effected inductively, capacitatively, by means of an electrical heating resistance, by thermal radiation and/or thermal conduction, by means of an electrical heating element or by means of a burner and the heating device engaging around the shaped and/or profiled body and/or being inserted in it.

2. Method as claimed in Claim 1, characterised in that the thermal treatment and the heating in the heating device are effected simultaneously.

3. Method as claimed in one of the preceding claims, characterised in that the heating device is lowered after the thermal treatment and heating to release the shaped and/or profiled body.

4. Method as claimed in one of the preceding claims, characterised in that after the heating process the heating device constitutes thermal insulation for the shaped and/or profiled body.

5. Method as claimed in one of the preceding claims, characterised in that the heating device is integrated or integratable with an introduction and/or connection device for the shaped and/or profiled body by means of which the shaped and/or profiled body may be swung into a metallurgical vessel at the place of use and may be fixed on a metallurgical vessel or its valve.

6. Method as claimed in one of the preceding claims, characterised in that the moulded and/or profiled body is an immersion nozzle or a shadow tube.

## Revendications

1. Procédé de fabrication de corps façonnés et/ou profilés en céramique, tels que des briques, des plaques, des tiges, des tubes destinés à être utilisés sous des températures élevées, notamment dans des installations métallurgiques de coulée continue, un mélange céramique étant façonné et soumis à un traitement thermique et le traitement thermique étant réalisé au moins partiellement sur le lieu d'utilisation du corps façonné et/ou profilé à l'aide d'un dispositif de chauffage au moyen de duquel on chauffe également le corps façonné et/ou profilé sur le lieu d'utilisation, le traitement thermique et le réchauffage étant réalisés par induction, par capacité, au moyen d'une résistance chauffante électrique, par rayonnement thermique et/ou par conduction thermique à l'aide d'un élément chauffant électrique ou à l'aide d'un brûleur et le dispositif de chauffage entourant le corps façonné et/ou profilé et/ou étant placé à l'intérieur de celui-ci.

2. Procédé selon la revendication 1, caractérisé par le fait que le traitement thermique et le réchauffage sont réalisés simultanément dans le dispositif de chauffage.

3. Procédé selon l'une des revendications précédentes, caractérisé par le fait qu'après le traitement thermique et le réchauffage on éloigne le dispositif de chauffage aux fins de dégager le corps façonné et/ou profilé.

4. Procédé selon l'une des revendications précédentes, caractérisé par le fait qu'après le traitement thermique, le dispositif de chauffage forme une isolation thermique pour le corps façonné et/ou profilé.

5. Procédé selon l'une des revendications précédentes, caractérisé par le fait que le dispositif de chauffage est intégré ou peut être intégré dans un dispositif de mise en place et/ou de raccordement pour le corps façonné et/ou profilé à l'aide duquel ledit corps façonné et/ou profilé, sur le lieu de montage, peut être placé dans une cuve métallurgique et fixé à ladite cuve métallurgique ou à l'obturateur de celle-ci.

6. Procédé selon l'une des revendications précédentes, caractérisé par le fait que le corps façonné et/ou profilé est une busette de coulée ou une busette immergée.
